# EUROPEAN PATENT APPLICATION

(11) **EP 4 131 103 A1**
(43) Date of publication of application: **08.02.2023**
(21) Application number: 21781297.3
(22) Date of filing: 30.03.2021
(51) Int. Cl.: G06Q 10/08, B65G 61/00

(54) **INFORMATION PROCESSING DEVICE, CONTAINER FOR PERISHABLE ITEM, AND PROGRAM**

(30) Priority: 31.03.2020 JP 2020065235
(71) Applicant: Daikin Industries, Ltd., Osaka-shi, Osaka 530-0001 (JP)
(72) Inventor: SATOU, Kiichirou, Osaka-shi, Osaka 530-8323 (JP); MATSUI, Hidenori, Osaka-shi, Osaka 530-8323 (JP); TANNO, Shouichi, Osaka-shi, Osaka 530-8323 (JP)
(74) Representative: Hoffmann Eitle
(86) International application number: PCT/JP2021/013472
(87) International publication number: WO 2021/200905

(57) **Abstract**

An information processing device includes: an acquisition unit configured to acquire information regarding an operation of an environment adjustment unit, the environment adjustment unit being configured to adjust an interior environment of a storage storing a perishable product; and a management unit configured to manage, using a distributed ledger, the information regarding the operation of the environment adjustment unit acquired by the acquisition unit. According to the information processing device, it is possible to show evidence for determining whether the cause of a defect of the perishable product is the environment adjustment unit.

## Description

### Technical Field

The present disclosure relates to an information processing device, a perishable product containing device, and a program.

### Background Art

For example, Patent Literature 1 discloses a logistics monitoring device including: a transportation state acquisition unit acquiring a transportation state of a luggage stored in a storage container; an identification information storage unit storing identification information; and a state data provision unit providing state data including the acquired transportation state and the stored identification information to a system managing the state data in a distributed ledger.

### Citation List

### Patent Literature

Patent Literature 1: Japanese Patent Application Laid-Open Publication No. 2019-121198

### Summary of Invention

### Technical Problem

When perishable products are transported or stored, they may be stored in a storage provided with an environment adjustment unit to adjust an interior environment of the storage. Here, the perishable products stored in the storage may suffer from some defects, including faster deterioration of their condition. There are various possible causes for such a defect of the perishable products, such as the perishable products themselves and transportation conditions of the storage. If it is possible to show evidence for determining whether the cause of the defect of the perishable product is the environment adjustment unit, such evidence can be used to clarify a responsibility of the parties concerned.

An object of the present disclosure is to show evidence for determining whether the cause of the defect of the perishable product is the environment adjustment unit.

### Solution to Problem

An information processing device of the present disclosure includes: an acquisition unit configured to acquire information regarding an operation of an environment adjustment unit, the environment adjustment unit being configured to adjust an interior environment of a storage storing a perishable product; and a management unit configured to manage, using a distributed ledger, the information regarding the operation of the environment adjustment unit acquired by the acquisition unit. In this case, it is possible to show evidence for determining whether the cause of the defect of the perishable product is the environment adjustment unit.

Here, the acquisition unit may acquire at least setting information regarding a setting made for the environment adjustment unit as the information regarding the operation of the environment adjustment unit, and the management unit may manage, using the distributed ledger, the setting information for the environment adjustment unit acquired by the acquisition unit. In this case, it is possible to show evidence for determining whether the cause of the defect of the perishable product is the setting for the environment adjustment unit.

In addition, the acquisition unit may acquire, together with the setting information, information indicating an implementer of the setting related to the setting information, and the management unit may manage the information indicating the implementer in association with the setting information using the distributed ledger. In this case, it is possible to clarify the relationship between the implementer of the setting for the environment adjustment unit and the setting information.

Moreover, the acquisition unit may acquire instruction information including an instructor of the setting related to the setting information, and the management unit may manage the instruction information using the distributed ledger. In this case, it is possible to clarify the instructor of the setting for the environment adjustment unit.

Moreover, the acquisition unit may acquire at least operation information of the environment adjustment unit as the information regarding the operation of the environment adjustment unit, and the management unit may manage, using the distributed ledger, the operation information of the environment adjustment unit acquired by the acquisition unit. In this case, it is possible to show evidence for determining whether the cause of the defect of the perishable product is the operation of the environment adjustment unit.

In addition, the acquisition unit may acquire, together with the operation information, setting information regarding a setting for the environment adjustment unit, and the management unit may manage the setting information acquired by the acquisition unit together with the operation information, in association with the operation information using the distributed ledger. In this case, it is possible to clarify a relationship between the setting for the environment adjustment unit and the operation of the environment adjustment unit.

Further, from another standpoint, a perishable product containing device of the present disclosure includes: a storage configured to store a perishable product; an environment adjustment unit configured to adjust an interior environment of the storage; and an output unit configured to output information regarding an operation of the environment adjustment unit in a data format handled by a management system, the management system being configured to manage the information using a distributed ledger. In this case, it is possible to show evidence for determining whether the cause of the defect of the perishable product is the environment adjustment unit.

Further, from another standpoint, there is provided a program causing a computer to implement functions of: controlling an operation of an environment adjustment unit to adjust an interior environment of a storage; and controlling a transmission unit to output information regarding the operation of the environment adjustment unit in a data format handled by a management system, the management system being configured to manage the information using a distributed ledger. In this case, it is possible to show evidence for determining whether the cause of the defect of the perishable product is the environment adjustment unit.

### Brief Description of Drawings

FIG. 1 illustrates an entire configuration of an information processing system of the present embodiment.
FIG. 2 illustrates an entire configuration of a container device of the present embodiment.
FIG. 3 illustrates an entire configuration of an operation section of the present embodiment.
FIG. 4 illustrates a functional configuration of a control section of the container device of the present embodiment.
FIG. 5 illustrates an example of a transmission information transmitted by a communication section of the container device.
FIG. 6 is a flowchart of an operation of the communication section of the container device of the present embodiment.
FIG. 7 illustrates an example of a display information displayed on a terminal device.
FIG. 8 illustrates a hardware configuration of the container device, a server device and the terminal device of the present embodiment.

### Description of Embodiments

Embodiments of the present invention will be described below with reference to attached drawings.

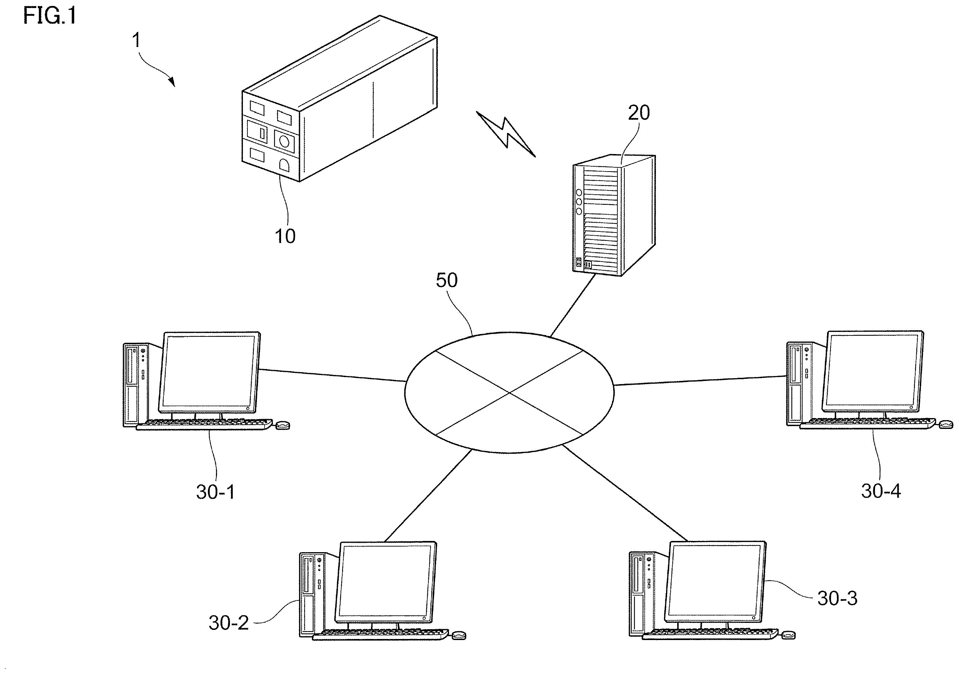

FIG. 1 illustrates an entire configuration of an information processing system 1 of the present embodiment.

### <Information processing system 1>

As shown in FIG. 1, the information processing system 1 includes a container device 10 that stores perishable products, a server device 20 that transmits and receives information to and from the container device 10, and plural terminal devices 30 that share the information with the server device 20.

The plural terminal devices 30 may be individually distinguished and described by adding a branch number (-N) after the reference sign, such as first terminal device 30-1, second terminal device 30-2, third terminal device 30-3, ..., Nth terminal device 30-N.

Note that, in the present embodiment, the server device 20 is an example of an information processing device, and the container device 10 is an example of a perishable product containing device.

The container device 10 of the present embodiment is transported by sea or overland. For example, when the container device 10 is transported by sea, the container device 10 and the server device 20 are connected communicably to each other by a satellite communication network using a communication satellite. Further, for example, when the container device 10 is transported overland, the container device 10 and the server device 20 are connected communicably to each other by a terrestrial communication network.

The server device 20 and the plural terminal devices 30 of the present embodiment are connected communicably to each other via a network 50. Further, the network 50 of the present embodiment constitutes a blockchain network for managing a distributed ledger. Then, the information processing system 1 manages, using the distributed ledger, information regarding an operation of an adjustment unit 12 (to be described later) acquired from the container device 10 by the server device 20, by use of the network 50 that constitutes the blockchain network.

Note that, in the present embodiment, the server device 20 functions as an example of an acquisition unit that acquires information from the container device 10, and further functions as an example of a management unit that manages the information, by use of other devices in the network 50.

### <Container device 10>

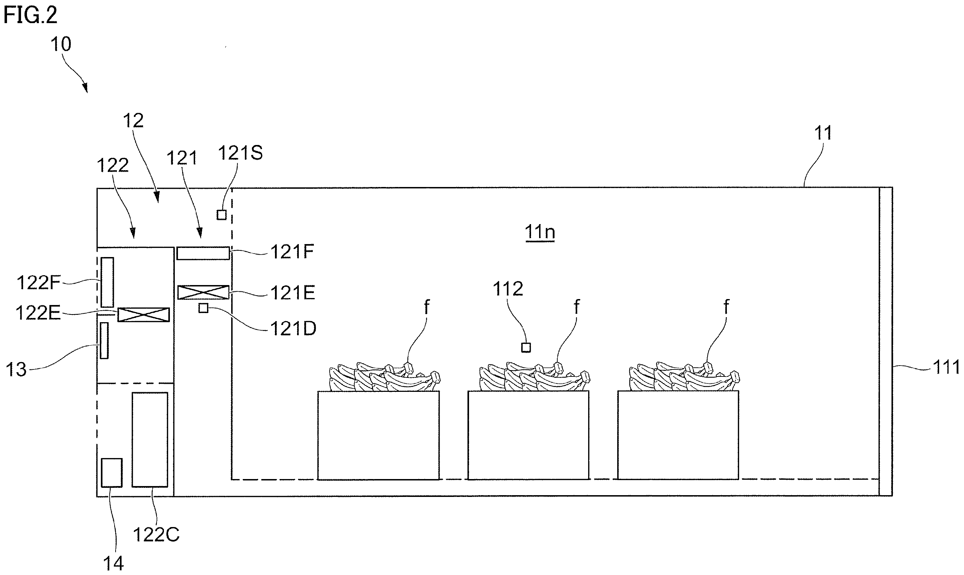

FIG. 2 illustrates an entire configuration of the container device 10 of the present embodiment.

As shown in FIG. 2, a reefer container capable of controlling temperature and humidity can be used for the container device 10 of the present embodiment. The container device 10 can freeze or refrigerate perishable products f to be stored.

The container device 10 of the present embodiment includes a box-shaped housing section 11 and the adjustment unit 12 that adjusts the air environment such as the temperature and the humidity inside the housing section 11 (hereinafter, referred to as an "interior 11n"). Further, the container device 10 includes an operation section 13 for performing operations such as various settings in the container device 10, and a control section 14 that comprehensively controls the container device 10.

Note that, in the present embodiment, the housing section 11 is an example of a storage, the adjustment unit 12 is an example of an environment adjustment unit, and the control section 14 is an example of an output unit or a transmission unit.

### <Housing section 11>

The housing section 11 forms a space for storing products such as the perishable products f inside. The housing section 11 can make the interior 11n airtight with an opening and closing door 111 closed. Note that, an example of the products stored in the interior 11n includes the perishable products f whose freshness changes over time. Examples of the perishable products f include green goods, fresh fish, meat, and so on. Here, examples of the green goods include vegetables and fruits. The perishable products f also include beverages such as milk and non-food products such as fresh flowers and chemicals.

Further, the housing section 11 includes a condition sensor 112 that detects the condition of the perishable products f. The condition sensor 112 of the present embodiment identifies freshness of the perishable products f stored in the container device 10. Then, the condition sensor 112 transmits information of freshness of the perishable products f to the control section 14 as condition information.

Examples of the condition sensor 112 include an odor sensor that identifies freshness based on odors generated by the perishable products f, an image sensor that identifies freshness based on colors exhibited by the perishable products f, a sugar content sensor that identifies freshness based on sugar contents of the perishable products f, and so on. Further, examples of the condition sensor 112 include an acidity sensor that identifies freshness based on acidity of the perishable products, a hardness sensor that identifies freshness based on hardness of the perishable products f, a water content sensor that identifies freshness based on water contents contained in the perishable products, and so on. In addition, examples of the condition sensor 112 include a ripeness sensor that identifies freshness based on ripeness of the perishable products and a biosensor that identifies freshness based on the amount of bacteria generated from the perishable products. Moreover, examples of the condition sensor 112 include an optical sensor that identifies freshness by measuring chlorophyll fluorescence of the perishable products, and a gas sensor that detects gas such as ethylene gas or carbon dioxide emitted from the perishable products depending on their freshness.

### <Adjustment unit 12>

The adjustment unit 12 includes an indoor unit 121 provided in the interior 11n and an outdoor unit 122 provided outside the housing section 11 and connected to the indoor unit 121 by a refrigerant circuit (not shown).

The indoor unit 121 includes a first heat exchanger 121E and an indoor fan 121F that blows air sucked from the interior 11n into the first heat exchanger 121E. Further, the indoor unit 121 includes a suction air sensor 121S that measures quality of air sucked from the interior 11n into the indoor unit 121, and a blow-out air sensor 121D that measures quality of air blown out from the indoor unit 121 into the interior 11n. Note that, the quality of the air measured by the suction air sensor 121S and the blow-out air sensor 121D includes gas concentration such as air temperature, air humidity, and oxygen concentration contained in the air.

The outdoor unit 122 includes a second heat exchanger 122E that is connected to the first heat exchanger 121E by the refrigerant circuit, an outdoor fan 122F that blows air outside the housing section 11 to the second heat exchanger 122E, and a compressor 122C that compresses a refrigerant circulating in the refrigerant circuit.

The indoor unit 121 and the outdoor unit 122 of the adjustment unit 12 are controlled by the control section 14 so that the interior 11n has a set temperature and a set humidity. Further, for example, the container device 10 of the present embodiment slows down the speed of deterioration of freshness of the perishable products f by freezing or refrigerating the interior 11n.

Note that, the adjustment unit 12 of the container device 10 can adjust temperature and humidity of the interior 11n, but the air environment to be adjusted is not limited to temperature and humidity. The adjusting unit 12 may adjust gas concentration of the interior 11n. Examples of a type of gas adjusted by the adjustment unit 12 include gas related to the condition of the perishable products f such as freshness and ripeness of the perishable products f. Examples of the gas include oxygen, carbon dioxide, nitrogen, ethylene gas, and so on. If the adjustment unit 12 adjusts gas, a gas supply section for supplying gas to the container device 10 is provided. Then, the adjusting unit 12 controls a flow rate of the gas supplied to the interior 11n by the gas supply section according to measured values of the gas concentration sensor measured by the suction air sensor 121S, for example.

### <Operation section 13>

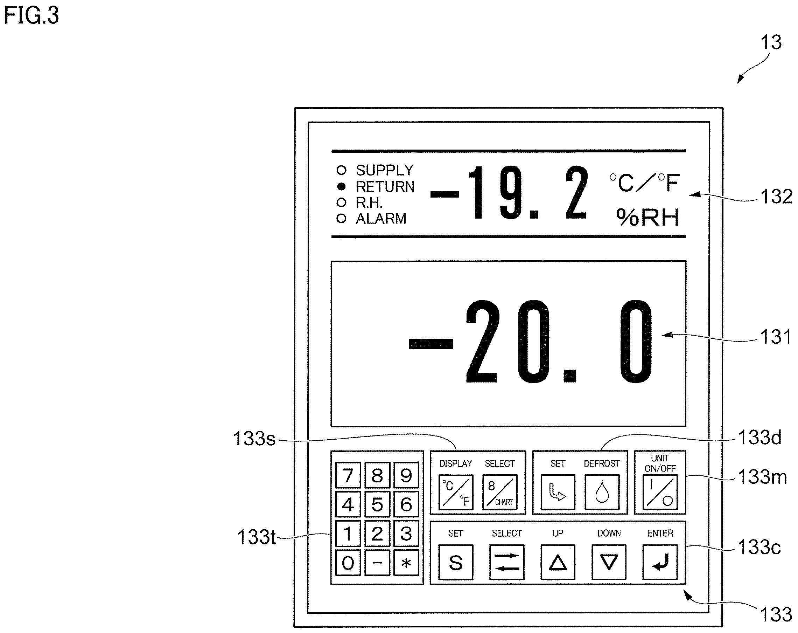

FIG. 3 illustrates an entire configuration of the operation section 13 of the present embodiment.

As shown in FIG. 3, the operation section 13 includes a setting display section 131 that displays setting information regarding a setting for the adjustment unit 12, a measurement display section 132 that displays measurement information, which is actually measured information, and an operation button section 133 that is operated by an implementer who performs the setting.

The setting display section 131 displays the setting information set by the implementer who operates the operation button section 133. In the example of FIG. 3, the setting display section 131 shows that the set temperature is "-20.0" °C. Further, the setting display section 131 displays various information regarding the setting, including the set temperature, the set humidity, and information for performing the setting, according to a display operation in the operation button section 133.

The measurement display section 132 displays the measurement information which is actually measured by the adjustment unit 12. In the example of FIG. 3, "-19.2" °C is shown as suction temperature measured by the suction air sensor 121S (refer to FIG. 2). Further, the measurement display section 132 displays various measurement information such as the suction temperature, blow-out temperature, and the humidity, according to the display operation in the operation button section 133.

The operation button section 133 includes a reception section that receives input when the measurement information to be displayed on the measurement display section 132 is selected or when the implementer performs the setting.

The operation button section 133 includes a power source button 133m for turning on or off power source of the adjustment unit 12, a defrost button 133d for performing defrost, and a selection button 133s for selecting information to be displayed on the measurement display section 132. Further, the operation button section 133 includes a setting button 133c for receiving various instructions for setting the setting information, and a numeric keypad 133t for inputting numerical information.

If the adjustment unit 12 is set via the operation section 13, the operation section 13 of the present embodiment requires inputting ID information that identifies the implementer who performs the setting. The ID information is approved by inputting predetermined ID information and a numerical password with, for example, the numeric keypad 133t. As a result, the operation section 13 of the present embodiment can identify the implementer who performs the setting.

Note that, the setting information to be set via the operation section 13 includes, in addition to the above-mentioned temperature, gas concentration of the gas such as carbon dioxide, oxygen, nitrogen, and ethylene, and humidity.

Although the setting for the adjustment unit 12 of the container device 10 is performed by directly operating the operation section 13 in the present embodiment, the setting method is not limited to this embodiment. For example, a shipper can perform the setting for the adjustment unit 12 from the first terminal device 30-1 owned by the shipper via a communication section 145, which will be described later, of the control section 14. In this case, too, the implementer who performs the setting for the adjustment unit 12 is identified by inputting the ID information or the like.

### <Control section 14>

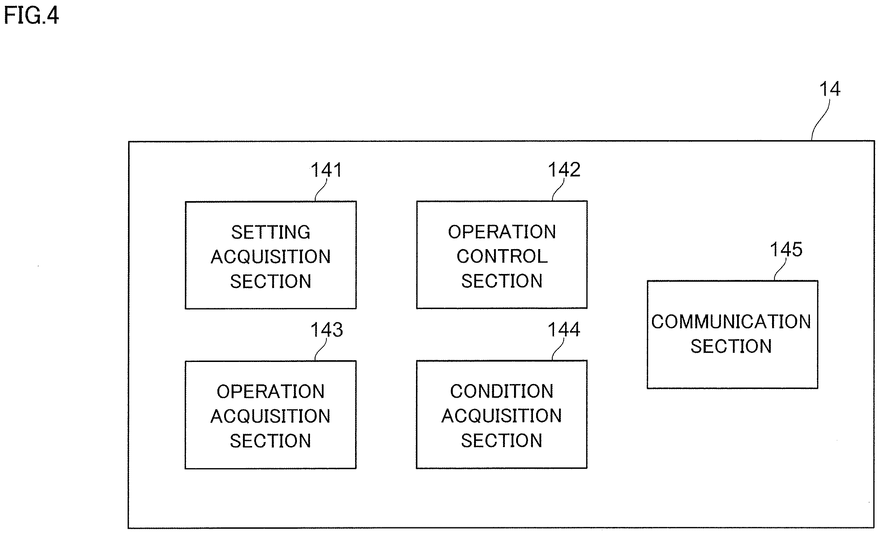

FIG. 4 illustrates a functional configuration of the control section 14 of the container device 10 of the present embodiment.

As shown in FIG. 4, the control section 14 of the present embodiment includes a setting acquisition section 141 that acquires the setting information of the air environment of the interior 11n via the operation section 13 and an operation control section 142 that controls the operation of the adjustment unit 12. Further, the control section 14 includes an operation acquisition section 143 that acquires operation information of the adjustment unit 12, a condition acquisition section 144 that acquires the condition information of the perishable products f and the communication section 145 that communicates information regarding the operation of the adjustment unit 12.

The setting acquisition section 141 acquires the setting information that is set by the implementer via the operation section 13. The setting information is a target air environment of the interior and information serving as criteria for determining the operation of the adjustment unit 12. The setting acquisition section 141 acquires the setting information at the timing when the operation section 13 receives the setting information. Further, the setting acquisition section 141 stores time information, which is the date and time when the setting information is received, in association with the setting information.

Then, the setting acquisition section 141 transmits the setting information to the operation control section 142. On the other hand, the setting acquisition section 141 transmits the acquired setting information to the communication section 145. The setting information that the setting acquisition section 141 transmits to the operation control section 142 and the communication section 145 has the same content.

The operation control section 142 controls the operation of the adjustment unit 12 based on the setting information acquired from the setting acquisition section 141. For example, the operation control section 142 operates the compressor 122C and the indoor fan 121F based on the set temperature indicated by the setting information and the measured temperature measured by the suction air sensor 121S so that the measured temperature approaches the set temperature.

The operation acquisition section 143 acquires the operation information of the adjustment unit 12 via, e.g., a signal line (not shown). Further, the operation acquisition section 143 constantly acquires the operation information. The operation information is information of a movement itself of each element in the adjustment unit 12 to achieve set conditions for the air environment of the interior. The operation information of the present embodiment includes information regarding a power supply to the adjustment unit 12 and information regarding a number of rotations of the indoor fan 121F. Further, the operation information of the present embodiment includes information regarding a number of rotations of the compressor 122C, information regarding a number of rotations of the outdoor fan 122F, and information regarding a temperature difference between the suction temperature and the blow-out temperature. Note that, the information regarding the temperature difference is an example of information for identifying the operation of the refrigerant.

The information regarding the power supply includes information of the presence or the absence of the power supply from an external power source to the container device 10 and information of a supply voltage of the power supply, if any.

Further, the information regarding the number of rotations of the outdoor fan 122F, the compressor 122C, or the indoor fan 121F is identified by measuring the mechanical movement with a sensor, not by a command value of the number of rotations from the operation control section 142 for each element. For example, a tachometer provided on a rotation shaft or an encoder provided on a drive motor can be used for measuring the number of rotations.

Further, the information regarding the temperature difference is identified from the difference between the suction temperature measured by the suction air sensor 121S and the blow-out temperature measured by the blow-out air sensor 121D.

The condition acquisition section 144 acquires the condition information of the perishable products f from the condition sensor 112 provided in the interior 11n. The condition acquisition section 144 constantly acquires the condition information.

The communication section 145 communicates information between the container device 10 and the server device 20 via a non-shown communication device. The communication device may be provided for each container device 10, and may be provided for, for example, a transportation device such as a ship or a truck on which the container device 10 is loaded.

Then, the communication section 145 of the present embodiment acquires the setting information from the setting acquisition section 141. The setting information includes information of turning on or off of the power source of the adjustment unit 12, information of the set temperature, and information of the set humidity. In addition, the setting information includes information of the implementer who performs the setting and information of the set time when the setting is performed.

Further, the communication section 145 acquires the operation information from the operation acquisition section 143. The operation information includes the information regarding the power supply, the information regarding the number of rotations of the outdoor fan 122F, the information regarding the number of rotations of the compressor 122C, the information regarding the number of rotations of the indoor fan 121F, and the information regarding the temperature difference.

Further, the communication section 145 acquires the condition information from the condition acquisition section 144. The condition information includes the information of freshness of the perishable products f stored in the interior 11n.

Then, the communication section 145 acquires the setting information, the operation information, and the condition information at predetermined time intervals such as every hour, and transmits the acquired information to the server device 20. In addition, the communication section 145 adds time information, which is the information of the date and time when the information is acquired, and container ID information, which is identification information that can uniquely identify the container device 10, to the setting information, the operation information, and the condition information and transmits them to the server device 20. In the following description, the setting information, the operation information, the condition information, the time information, and the container ID information are collectively referred to as "transmission information".

Further, the communication section 145 of the present embodiment outputs the transmission information in the data format handled by a blockchain system managed by the distributed ledger.

Further, the communication section 145 transmits the transmission information to the server device 20 if any of specific criteria is satisfied, apart from the predetermined time interval described above. The specific criteria include whether a transmission request of information is received from the terminal device 30 via the server device 20. In addition, the specific criteria include whether the setting information is changed, whether the operation information satisfies predetermined criteria, and whether the condition information satisfies predetermined criteria.

Further, if any of the specific criteria is satisfied, the communication section 145 may transmit the transmission information at a shorter time interval than the initially set predetermined time interval. In this case, the communication section 145 periodically changes the frequency of transmitting the transmission information in response to any of the specific criteria being satisfied.

Note that the above criterion "the setting information is changed" includes the case where the power source of the adjustment unit 12 in the container device 10 is turning on or off. When the power source is turned on, the communication section 145 transmits the transmission information including information indicative of the turning on of the power source. Further, when the power source is turned off, the communication section 145 transmits the transmission information including information indicative of the turning off of the power source before the power is shut down. Further, if the communication section 145 cannot transmit the transmission information when the power source is turned off, the communication section 145 may transmit, at the next turning on of the power source, the transmission information including the content associated with the previous turning off of the power source.

Further, the cases where the operation information satisfies the predetermined criteria include the case where the external power supply to the container device 10 changes from being absent to being present or from being present to being absent. If the power supply changes from being absent to being present, the communication unit 145 transmits the transmission information including the fact that the power supply has started. Further, if the power supply changes from being present to being absent, the communication unit 145 transmits, at the next start of the power supply, the transmission information including the fact that the previous power supply stopped. In addition, if the container device 10 includes a built-in battery that can at least make the control unit 14 operate, the communication unit 145 may transmit the transmission information including the fact that the power supply stopped, upon the power supply changing from being present to being absent.

Further, regardless of the presence or the absence of the power supply, the cases where the operation information satisfies the predetermined criteria, as determined by the communication section 145, may include the case where the voltage supply is lower than a predetermined voltage.

The transmission information that the above-described communication section 145 (refer to FIG. 4) transmits to the server device 20 will now be specifically described.

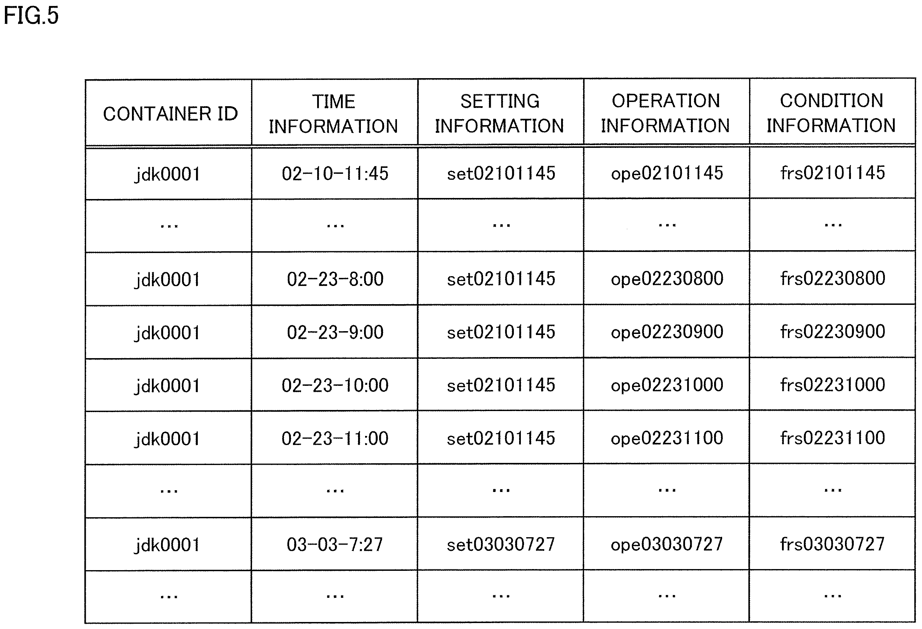

FIG. 5 illustrates an example of the transmission information transmitted by the communication section 145 of the container device 10.

As shown in FIG. 5, the communication unit 145 transmits the transmission information including the time information, the setting information, the operation information and the condition information in association with the container ID information that can uniquely identify the container device 10.

For example, the communication section 145 transmits the transmission information acquired at the date and time "02-23-08:00" to the server device 20. Further, the communication section 145 transmits the transmission information acquired at the date and time "02-23-09:00", which is one hour later, to the server device 20. As such, the communication section 145 acquires the information based on the predetermined time interval, and transmits the transmission information to the server device 20.

Further, in the example shown in FIG. 5, the setting information is changed at, for example, "03-03-07:27". As such, in response to any specific criterion being satisfied, the communication section 145 transmits the transmission information to the server device 20 at an individual timing when the specific criterion is satisfied, rather than the predetermined time interval.

Next, the operation of the communication section 145 (refer to FIG. 4) of the control section 14 in the container device 10 will be specifically described.

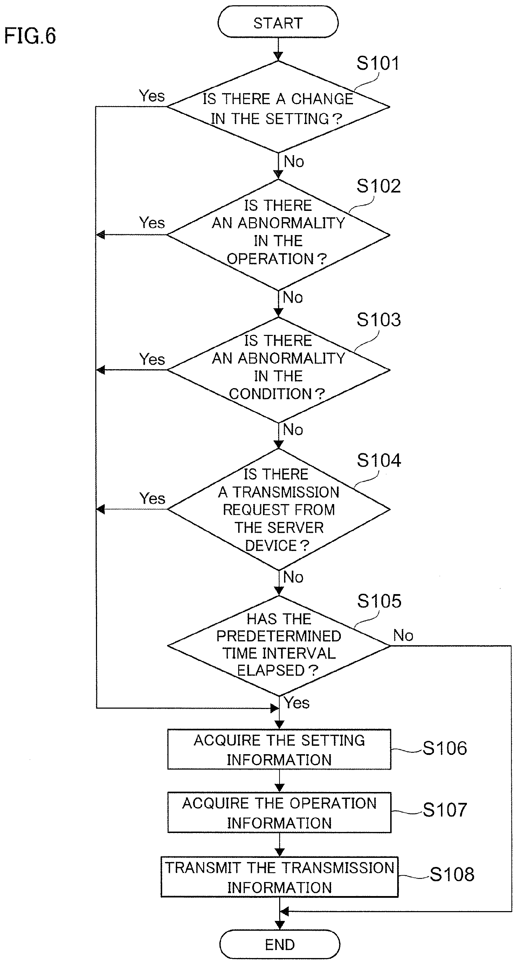

FIG. 6 is a flowchart of an operation of the communication section 145 of the container device 10 of the present embodiment.

The communication section 145 determines whether there is a change in the setting based on the setting information acquired by the setting acquisition section 141 (S101). If there is any change in the setting (Yes in S101), the process proceeds to S106. On the other hand, if there is no change in the setting (No in S101), the communication section 145 determines whether there is an abnormality in the operation of the device constituting the adjustment unit 12 (S 102).

Then, if there is any abnormality in the operation of the device constituting the adjustment unit 12 (Yes in S102), the process proceeds to S106. On the other hand, if there is no abnormality in the operation of the device constituting the adjustment unit 12 (No in S102), the communication section 145 determines whether there is an abnormality in the condition of the perishable products f (S103). For example, the perishable products f can be determined to have an abnormality when the freshness of the perishable products f specified by the condition sensor 112 falls below a predetermined threshold.

If there is any abnormality of the perishable products f (Yes in S103), the process proceeds to S106. On the other hand, if there is no abnormality of the perishable products f (No in S103), the communication section 145 determines whether there is a transmission request from the server device 20 (S104).

Then, if there is the transmission request (Yes in S104), the process proceeds to S106. On the other hand, if there is no transmission request (No in S104), the communication section 145 determines whether the predetermined time interval has elapsed (S105).

If the communication section 145 determines that the predetermined time interval has elapsed (Yes in S105), the process proceeds to S106. On the other hand, if the predetermined time interval has not elapsed (No in S105), the communication section 145 returns to the start of the process again.

Then, if the communication section 145 determines that there is a change in the setting (Yes in S101), determines that there is an abnormality in the operation (Yes in S102), determines that there is an abnormality in the condition of the perishable products f (Yes in S103), determines that there is a transmission request (Yes in S104), or determines that the predetermined time interval has elapsed (Yes in S105), the communication section 145 acquires the setting information from the setting acquisition section 141 (S106). Further, the communication section 145 acquires the operation information from the operation acquisition section 143 (S107).

Thereafter, the communication section 145 of the present embodiment transmits, to the server device 20, the transmission information including the setting information and the operation information associated with the container ID information and with the condition information and the time information added (S108).

### <Server device 20 and terminal device 30>

Next, management of the transmission information including the information regarding the operation, using the distributed ledger, will be described.

The information processing system 1 of the present embodiment manages information using the distributed ledger. The blockchain system is used to manage the distributed ledger.

The blockchain system uses hash functions and public key cryptography to ensure the authenticity of the information. In the present embodiment, the information of the adjustment unit 12 in the container device 10 is transmitted to all of the server devices 20 and the plural terminal devices 30 that use the information. The transmitted information is verified for authenticity and approved by one of the plural devices that performs mining, and thereby the information is organized into blocks and recorded in the distributed ledger constituted by a blockchain.

Here, the plural terminal devices 30 can include the first terminal device 30-1 owned by the shipper of the perishable products f stored in the container device 10, and the second terminal device 30-2 owned by a transporter such as a ship owner who transports the container device 10. Further, the plural terminal devices 30 can include the third terminal device 30-3 owned by the manufacturer of the container device 10 and the fourth terminal device 30-4 that performs mining in the blockchain.

Then, when the server device 20 acquires the transmission information from the container device 10, the server device 20 shares data set including the transmission information and a hash value of the immediately preceding block in the blockchain among the plural terminal devices 30 as a whole. Further, for example, the fourth terminal device 30-4 that performs mining creates a new block including the transmission information, the hash value and a nonce value of the immediately preceding block. In addition, the fourth terminal device 30-4 finds the nonce value such that a predetermined number of zeros are arranged at the beginning of the hash value calculated from the new block. The fourth terminal device 30-4 identifies the hash value of the new block by finding the nonce value, and adds the new block to the blockchain. Then, the fourth terminal device 30-4 updates the ledger. The updated ledger, which is a blockchain with a new block added, is also shared by the server device 20, the first terminal device 30-1, the second terminal device 30-2 and the third terminal device 30-3. Even if a part of the block is tampered with by any device, the tampered block of the blockchain created in this way is invalidated based on the consistency with the blockchain stored in the other devices.

Then, each of terminal devices 30 can refer to the information shown based on the transmission information whose authenticity is ensured (hereinafter, referred to as display information). Since the authenticity of the transmission information that is the source of the display information is ensured, the content of the display information shown on each of the plural terminal devices 30 is the same.

Next, an example where the information regarding the operation includes instruction information will be described.

For example, when the container device 10 transports the perishable products f, the set temperature of the interior 11n is typically instructed by the shipper of the perishable products f. In this case, the shipper instructs the transporter who transports the container device 10, for example, on transportation conditions of the perishable products f such as the set temperature of the container device 10. Further, the implementer of the setting on the transporter side performs the setting for the adjustment unit 12 using the operation section 13 (refer to FIG. 3) of the container device 10 according to the instruction of the shipper.

The information processing system 1 of the present embodiment manages the instruction information including an instructor instructing the setting for the adjustment unit 12 and the content of instruction, using the distributed ledger in the blockchain system. Specifically, the information processing system 1 transmits the instruction information instructing the setting for the adjustment unit 12 from the first terminal device 30-1 owned by the shipper to the second terminal device 30-2 owned by the transporter. Then, the instruction information is also shared with other devices constituting the blockchain system. In addition, the instruction information is recorded in the distributed ledger in the blockchain.

If the implementer on the transporter side sets the adjustment unit 12 to a certain temperature, for example, the distributed ledger recorded in the above manner may be used to prove that the set temperature is the one instructed by the shipper.

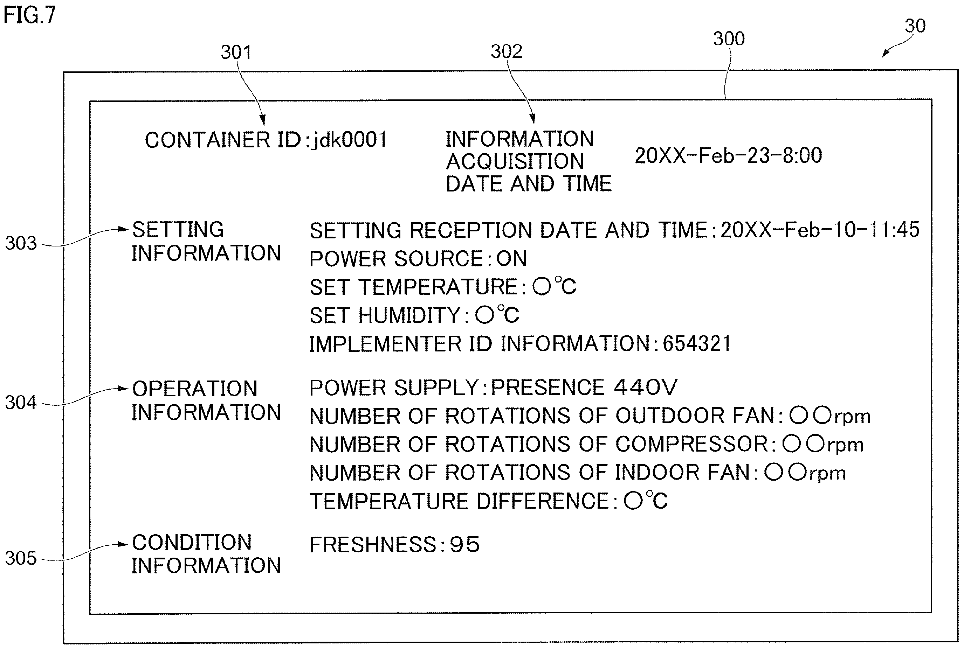

FIG. 7 illustrates an example of the display information displayed on the terminal device 30.

As shown in FIG. 7, display information 300 is displayed on a screen of the terminal device 30. The display information 300 includes container information 301 indicating the container ID and acquisition time information 302 indicating the date and time when the information is acquired. Further, the display information 300 displays setting information 303, operation information 304, and condition information 305.

The setting information 303 includes information of setting reception date and time, which is the date and time when the setting operation is performed, and information of turning on or off of the power source for the adjustment unit 12 in the container device 10. Further, the setting information 303 includes information of the set temperature of the interior 11n and the set humidity of the interior 11n. Then, the setting information 303 includes the ID information that can identify the implementer who performs the setting.

The operation information 304 includes information of the power supply to the adjustment unit 12 in the container device 10. Further, the operation information 304 includes information of the number of rotations of the outdoor fan 122F, information of the number of rotations of the compressor 122C, information of the number of rotations of the indoor fan 121F, and information of the temperature difference between the suction temperature and the blow-out temperature.

The condition information 305 includes information of freshness of the perishable products f displayed as a numerical value.

The above display information serves as an evidence that objectively proves that the adjustment unit 12 has been performing under predetermined settings and that the adjustment unit 12 has been operating normally. For example, it is assumed that the temperature should be set to -10 °C according to the content of the instruction by the instructor, but the implementer of the setting sets the temperature to + 10 °C, resulting in an abnormality of the perishable products f in the interior 11n. In the event of occurrence of such a situation, the display information objectively proves the actually set temperature and the implementer of the setting.

Note that, the instruction information instructing the setting for the adjustment unit 12 may be displayed together with the display information 300 shown in FIG. 7. This provides better viewing of the actually set setting information and the content of the setting indicated by the instruction information.

Finally, an example hardware configuration of the various devices in the present embodiment will be described.

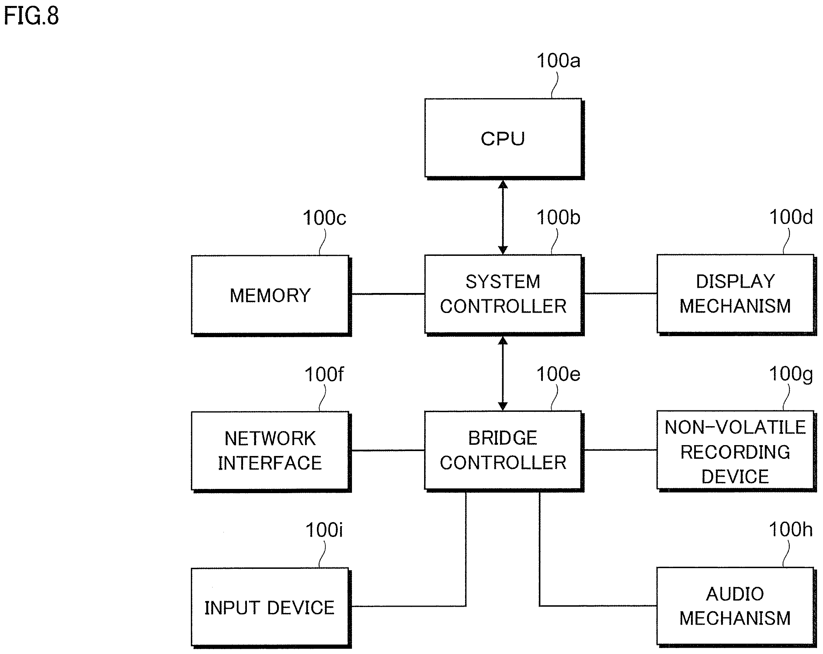

FIG. 8 illustrates a hardware configuration of the container device 10, the server device 20 and the terminal device 30 of the present embodiment.

As shown in FIG. 8, the container device 10, the server device 20, and the terminal device 30 include a central processing unit (CPU) 100a as a computing unit and a memory 100c as a main storage unit. Further, each device includes as external devices a non-volatile recording device 100g, a network interface 100f, a display mechanism 100d, an audio mechanism 100h, an input device 100i, such as a keyboard and a mouse.

The memory 100c and the display mechanism 100d are connected to the CPU 100a via a system controller 100b. Further, the network interface 100f, the non-volatile recording device 100g, the audio mechanism 100h, and the input device 100i are connected to the system controller 100b via a bridge controller 100e. These components are connected via various types of buses, such as system buses and input-output buses.

The non-volatile recording device 100g stores a program for implementing each function. Then, the program is loaded onto the memory 100c, and the processing based on the program is executed by the CPU 100a, to thereby implement various functions. Examples of the non-volatile recording device 100g include semiconductor memories such as a solid state drive (SSD) and magnetic disk devices such as a hard disk drive (HDD).

Here, if the container device 10 is implemented by the computer shown in FIG. 8, each function of the setting acquisition section 141, the operation control section 142, the operation acquisition section 143, the condition acquisition section 144, and the communication section 145 described with reference to FIG. 4 is implemented by the CPU 100a executing the program.

Here, each of the present embodiments as described above can be viewed as follows.

The server device 20 or the container device 10 of the present disclosure acquires information regarding the operation of the adjustment unit 12 that adjusts the environment of the interior 11n in the housing section 11 storing the perishable products, and manages the information regarding the operation of the adjustment unit 12 using the distributed ledger. According to the server device 20 or the container device 10, it is possible to show evidence for determining whether the cause of the defect of the perishable product is the adjustment unit 12 since the information regarding the operation of the adjustment unit 12 is managed in a state in which tampering is extremely difficult.

Here, the server device 20 or the container device 10 acquires at least the setting information regarding the setting made for the adjustment unit 12 as the information regarding the operation of the adjustment unit 12, and manages the setting information for the adjustment unit 12 using the distributed ledger. In this case, it is possible to show evidence for determining whether the cause of the defect of the perishable product is the setting of the adjustment unit 12 since the setting information regarding the setting for the adjustment unit 12 is managed in a state in which tampering is extremely difficult.

In addition, the server device 20 or the container device 10 acquires, together with the setting information, information indicating the implementer of the setting related to the setting information, and manages the information indicating the implementer in association with the setting information, using the distributed ledger. In this case, it is possible to clarify the responsibility regarding an implementation of the setting by managing the implementer who performs the setting, in association with the content of the setting performed by the implementer.

Moreover, the server device 20 acquires the instruction information including the instructor of the setting related to the setting information and manage the instruction information using the distributed ledger. In this case, it is possible to clarify the responsibility of the instructor who has instructed the setting.

Moreover, the server device 20 or the container device 10 acquires at least the operation information of the adjustment unit 12 as the information regarding the operation of the adjustment unit 12, and manages the operation information of the adjustment unit 12 using the distributed ledger. In this case, it is possible to show evidence for determining whether the cause of the defect of the perishable product is the operation of the adjustment unit 12 since the operation information of the adjustment unit 12 is managed in a state in which tampering is extremely difficult.

In addition, the server device 20 or the container device 10 acquires, together with the operation information, the setting information regarding the setting for the adjustment unit 12, and manages the setting information acquired together with the operation information, in association with the operation information using the distributed ledger. In this case, for example, if the adjustment unit 12 does not operate according to the setting for the adjustment unit 12, it is possible to clarify the relationship between the setting for the adjustment unit 12 and the operation of the adjustment unit 12.

Further, from another standpoint, the container device 10 includes: the housing section 11 that stores the perishable product; the adjustment unit 12 that adjusts the interior environment of the housing section 11; and the control section 14 that outputs the information regarding the operation of the adjustment unit 12 in a data format handled by a management system that manages the information using the distributed ledger. In this case, it is possible to provide the container device 10 that can show evidence for determining whether the cause of the defect of the perishable product is the adjustment unit 12.

Further, from another standpoint, the program of the present disclosure causes the computer to implement functions of: controlling the operation of the adjustment unit 12 to adjust the interior environment of the housing section 11; and controlling the control section 14 to output the information regarding the operation of the adjustment unit 12 in a data format handled by a management system that manages the information using the distributed ledger. In this case, it is possible to provide the program that shows evidence for determining whether the cause of the defect of the perishable product is the adjustment unit 12.

In the information processing system 1 of the present embodiment, the server device 20 that acquires the transmission information from the container device 10 manages the transmission information in the blockchain network, but the present disclosure is not limited to this example.

For example, the container device 10 may share the transmission information with the plural terminal devices 30 using the network 50 without intervention of the server device 20. In this case, the server device 20 is not an essential component in the information processing system 1 of the present embodiment. Then, the container device 10 adds the hash value of the previous block to the transmission information and transmits it to at least one of the terminal devices 30. Further, in this case, the container device 10 is an example of the information processing device, the setting acquisition section 141 and the operation acquisition section 143 are examples of the acquisition unit, and the communication section 145 is an example of the management unit.

Further, for example, the plural container devices 10 are loaded on a ship or the like. Such a ship may be provided with an edge server device that aggregates and processes information of the plural container devices 10. Then, the edge server device may share the transmission information with the plural terminal devices 30 using the network 50 without intervention of the server device 20. In this case, the edge server device is an example of the information processing device, and the edge server device may be provided with the functions of the setting acquisition section 141, the operation acquisition section 143, and the communication section 145.

Note that, the present embodiment is described, using the container device 10, of which a sea container transported by sea is an example. However, the contents of the above-described embodiments are not limited to the container device 10 of the present embodiment. The contents of the above-described embodiments may be applied to an adjustment unit that is provided in a frozen warehouse or a refrigerated warehouse fixed on the ground and adjusts the air environment in the warehouse.

Further, each of the above-described configurations is not limited to each of the above-described embodiments, and can be changed within the scope not departing from the spirit of the present disclosure. In other words, it can be appreciated that various changes in form and detail may be without departing from the spirit and scope of the appended claims.

The present disclosure is not limited to the above-described configurations, and a part of each of the above-described configurations may be omitted, or another function may be added to each of the above-described configurations.

### Reference Signs List

- 1: Information processing system
- 10: Container device
- 11: Housing section
- 12: Adjustment unit
- 13: Operation section
- 14: Control section
- 20: Server device
- 30: Terminal device
- 50: Network
- 141: Setting acquisition section
- 142: Operation control section
- 143: Operation acquisition section
- 144: Condition acquisition section
- 145: Communication section

## Claims

1. An information processing device comprising:
an acquisition unit configured to acquire information regarding an operation of an environment adjustment unit, the environment adjustment unit being configured to adjust an interior environment of a storage storing a perishable product; and
a management unit configured to manage, using a distributed ledger, the information regarding the operation of the environment adjustment unit acquired by the acquisition unit.

2. The information processing device according to claim 1, wherein
the acquisition unit acquires at least setting information regarding a setting made for the environment adjustment unit as the information regarding the operation of the environment adjustment unit, and
the management unit manages, using the distributed ledger, the setting information for the environment adjustment unit acquired by the acquisition unit.

3. The information processing device according to claim 2, wherein
the acquisition unit acquires, together with the setting information, information indicating an implementer of the setting related to the setting information, and
the management unit manages the information indicating the implementer in association with the setting information using the distributed ledger.

4. The information processing device according to claim 2 or 3, wherein
the acquisition unit acquires instruction information including an instructor of the setting related to the setting information, and
the management unit manages the instruction information using the distributed ledger.

5. The information processing device according to claim 1, wherein
the acquisition unit acquires at least operation information of the environment adjustment unit as the information regarding the operation of the environment adjustment unit, and
the management unit manages, using the distributed ledger, the operation information of the environment adjustment unit acquired by the acquisition unit.

6. The information processing device according to claim 5, wherein
the acquisition unit acquires, together with the operation information, setting information regarding a setting for the environment adjustment unit, and
the management unit manages the setting information acquired by the acquisition unit together with the operation information, in association with the operation information using the distributed ledger.

7. A perishable product containing device comprising:
a storage configured to store a perishable product;
an environment adjustment unit configured to adjust an interior environment of the storage; and
an output unit configured to output information regarding an operation of the environment adjustment unit in a data format handled by a management system, the management system being configured to manage the information using a distributed ledger.

8. A program comprising instructions which, when the program is executed by a computer, cause the computer to carry out functions of:
controlling an operation of an environment adjustment unit to adjust an interior environment of a storage; and
controlling a transmission unit to output information regarding the operation of the environment adjustment unit in a data format handled by a management system, the management system being configured to manage the information using a distributed ledger.
